# EUROPEAN PATENT APPLICATION

(11) **EP 4 369 196 A1**
(43) Date of publication of application: **15.05.2024**
(21) Application number: 23207869.1
(22) Date of filing: 06.11.2023
(51) Int. Cl.: G06F 9/50, G06F 9/445

(54) **COMPUTATIONAL STORAGE DEVICE FOR EXECUTING OFFLOADING PROGRAM AND ELECTRONIC SYSTEM INCLUDING THE SAME**

(30) Priority: 08.11.2022 KR 20220148141
(71) Applicant: Samsung Electronics Co., Ltd., Suwon-si, Gyeonggi-do 16677 (KR)
(72) Inventor: LEE, Seunghan, 16677 Suwon-si (KR); EUN, Heeseok, 16677 Suwon-si (KR); JI, Sooyoung, 16677 Suwon-si (KR)
(74) Representative: Marks & Clerk LLP

(57) **Abstract**

An electronic system includes a computational storage device comprising a computing circuit and a memory device, wherein the computing circuit is configured to perform an offloading computing operation, and the memory device is configured to store an offloading program for the offloading computing operation, and a host configured to transmit, in response to an offloading request from a virtual machine, an offloading-related command for controlling the offloading computing operation and management information about the offloading program to the computational storage device. The computational storage device is configured to delete the offloading program based on the management information.

## Description

### BACKGROUND

The inventive concept relates to an electronic system, and more particularly, to a computational storage device for executing an offloading computing operation and an electronic system including the same.

Recently, various types of electronic devices have been used. An electronic device performs a unique function according to the operations of electronic circuits included therein. An electronic device may perform a unique function while operating independently. An electronic device may perform a unique function while communicating with other electronic devices.

A storage device may be an implementation example of an electronic device. A storage device may provide a storage service to a user by storing and outputting data according to the operations of elements included therein. A storage device may manage data independently, or may manage data while communicating with other electronic devices.

A host may provide a service to a user by communicating with a storage device. A host and a storage device may be integrated as an electronic system, and the host may correspond to a main processor of the electronic system. A host may transmit, to the storage device, data to be stored therein. In addition, a host may manage data that are stored in a storage device.

Recently, offloading technology has been proposed to overcome the limitations in finite resources and computational speed of a host. A host may transfer some computing operations to a storage device, and the storage device may execute the received computing operations and return an execution result to the host after performing the received computing operations. For example, the host may provide an offloading program to the storage device together with an offloading-related command, and the storage device may perform a computing operation using the offloading program in response to the offloading-related command.

On the other hand, in an electronic system (e.g., a data center or a database system) used by a plurality of users, a host may provide a plurality of offloading programs to a plurality of computational storage devices in response to user requests, and the computational storage devices may perform computing operations by using the offloading programs. At this time, management (e.g., maintenance and deletion) of the offloading programs is desirable to efficiently use memory spaces of the computational storage devices.

### SUMMARY

The inventive concept provides an electronic system configured so that a host provides, to a computational storage device, information for managing an offloading program stored in the computational storage device, and the computational storage device manages the stored offloading program, based on the information, thereby supporting an efficient offloading computing operation and an efficient memory use.

According to an aspect of the inventive concept, an electronic system includes a computational storage device comprising a computing circuit and a memory device, wherein the computing circuit is configured to perform an offloading computing operation, and the memory device is configured to store an offloading program for the offloading computing operation, and a host configured to transmit, in response to an offloading request from a virtual machine, an offloading-related command for controlling the offloading computing operation and management information about the offloading program to the computational storage device. The computational storage device is configured to delete the offloading program based on the management information.

According to an embodiment, the electronic system comprises a plurality of computational storage devices, including the computational storage device and one or more further computational storage devices. Each of the one or more further computational storage devices may be configured to store at least one offloading program from among a plurality of offloading programs, and perform an offloading computing operation based on the stored at least one offloading program. The host may be configured to transmit, in response to a plurality of offloading requests from a plurality of virtual machines, a plurality of offloading-related commands, each offloading-related command controlling an offloading computing operation of a corresponding one of the plurality of computational storage devices, and a plurality of pieces of management information, each piece of management information being about at least one offloading program stored in a corresponding one of the plurality of computational storage devices to the plurality of computational storage devices. Optionally, the plurality of computational storage devices may be further configured to delete the stored at least one offloading program based on at least one of the plurality of pieces of management information

According to another aspect of the inventive concept, an electronic system includes a plurality of computational storage devices, wherein each computational storage device is configured to store at least one offloading program from among a plurality of offloading programs, and perform an offloading computing operation based on the stored at least one offloading program, and a host configured to transmit, in response to a plurality of offloading requests from a plurality of virtual machines, a plurality of offloading-related commands, each offloading-related command controlling an offloading computing operation of a corresponding one of the plurality of computational storage devices, and a plurality of pieces of management information, each piece of management information being about at least one offloading program stored in a corresponding one of the plurality of computational storage devices to the plurality of computational storage devices.

According to another aspect of the inventive concept, a computational storage device includes a memory device configured to store an offloading program received from a host, a computing circuit configured to perform an offloading computing operation by executing the offloading program, and a management circuit configured to receive management information about the offloading program from the host and manage the offloading program based on the management information.

At least some of the above and other features of the invention are set out in the claims.

### BRIEF DESCRIPTION OF THE DRAWINGS

Embodiments will be more clearly understood from the following detailed description taken in conjunction with the accompanying drawings in which:
FIG. 1 is a block diagram illustrating an electronic system according to an embodiment;
FIG. 2 is a block diagram for describing an implementation example of a host of FIG. 1;
FIG. 3 is a flowchart of an operating method of an electronic system according to an embodiment;
FIG. 4 is a flowchart of an operating method of a computational storage device (CSD) driver according to an embodiment;
FIGS. 5A and 5B are diagrams for describing a management policy applied to first to fourth offloading programs according to an embodiment;
FIG. 6 is a flowchart of an operating method of an electronic system according to an embodiment;
FIG. 7A is a diagram showing a first offloading program table according to an embodiment, and FIGS. 7B and 7C are diagrams for describing first and third CSDs that operate based on a feature in the first offloading program table;
FIG. 8 is a diagram showing a first offloading program table according to an embodiment;
FIG. 9A is a diagram showing a first offloading program table according to an embodiment, and FIG. 9B is a diagram for describing a third CSD that operates based on a feature in the first offloading program table;
FIG. 10 is a flowchart of an operating method of a CSD according to an embodiment;
FIGS. 11A and 11B are diagrams each showing a second offloading program table according to an embodiment, and FIG. 11C is a diagram for describing a first CSD that operates based on the second offloading program table of FIG. 11A;
FIG. 12 is a flowchart of an operating method of an electronic system according to an embodiment;
FIGS. 13A to 13C are block diagrams for describing an operating method of an electronic system according to an embodiment;
FIG. 14 is a flowchart of an operating method of an electronic system according to an embodiment;
FIG. 15 is a table for describing an offloading-related command including management information according to an embodiment;
FIGS. 16A and 16B are tables for describing a method of transmitting management information according to an embodiment;
FIGS. 17A and 17B are flowcharts of an operating method of a CSD according to an embodiment;
FIG. 18 is a block diagram illustrating an electronic system according to an embodiment; and
FIG. 19 is a block diagram illustrating a database system according to an embodiment.

### DETAILED DESCRIPTION OF THE EMBODIMENTS

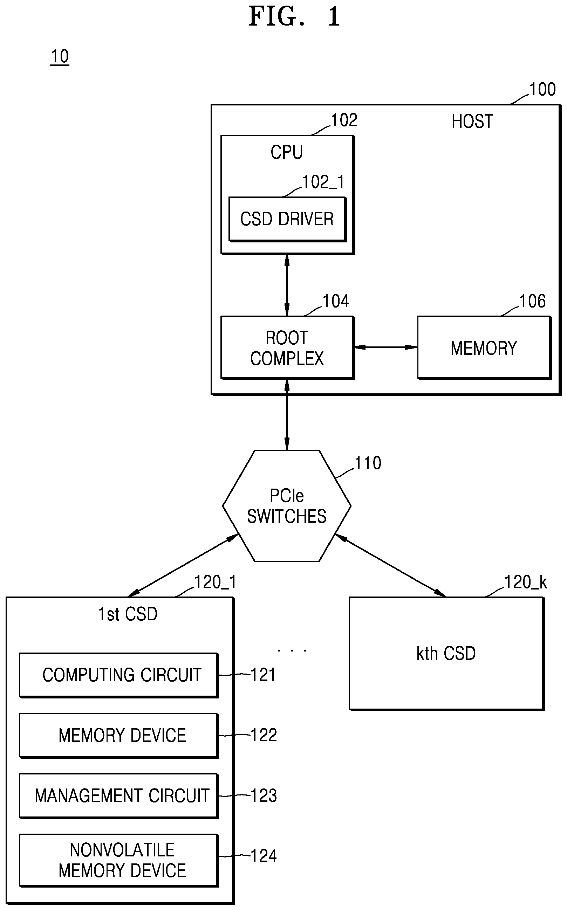

FIG. 1 is a block diagram illustrating an electronic system 10 according to an embodiment.

Referring to FIG. 1, the electronic system 10 may include a host 100, peripheral component interconnect express (PCIe) switches 110, and first to kth computational storage devices (CSDs) 120_1 to 120_k (where k is an integer greater than or equal to 1). The host 100 may include a central processing unit (CPU) 102, a root complex 104, and a memory 106. As an example, the memory 106 may be a system memory and may be connected to the CPU 102 via the root complex 104.

In an embodiment, the CPU 102 may include a CSD driver 102_1. The CPU 102 may drive the first to kth CSDs 120_1 to 120_k by using the CSD driver 102_1. The CSD driver 102_1 may be included in the CPU 102 as a separate logic in hardware, or may be implemented as a virtual component. In the present specification, the operation of the CSD driver 102_1 may also be interpreted as the operation of the CPU 102 or the host 100. In some embodiments, the CSD driver 102_1 may be implemented to be included in the root complex 104.

In an embodiment, in order to support offloading, the CSD driver 102_1 may perform an operation of generating offloading-related commands for controlling offloading computing operations of the first to kth CSDs 120_1 to 120_k, an operation of generating pieces of management information about offloading programs of the first to kth CSDs 120_1 to 120_k, and an operation of transmitting and receiving at least one of the offloading programs, the offloading-related commands, the pieces of management information, and data generated by the offloading computing operations between the first to kth CSDs 120_1 to 120_k. In addition, the CSD driver 102_1 may drive the first to kth CSDs 120_1 to 120_k so as to provide, to the CPU 102, memory space for general computing operations of the CPU 102.

In an embodiment, the PCIe switches 110 may be connected to or integrated into the root complex 104. The PCIe switches 110 may connect the CSDs 120_1 to 120_k to the root complex 104. In some embodiments, the PCIe switches 110 may be distributed and included in the first to kth CSDs 120_1 to 120_k.

Hereinafter, for convenience of explanation, the first CSD 120_1 will be described, but it will be understood that the technical idea of the inventive concept may be applied to the second to kth CSDs 120_2 to 120_k.

In an embodiment, the first CSD 120_1 may include a computing circuit 121, a memory device 122, a management circuit 123, and a nonvolatile memory device 124. In the present specification, the CSD 120_1 may be defined as a storage device including a logic capable of performing a computing operation in response to the offloading-related command from the host 100, and may be referred to as a storage device or a computational storage drive. In an embodiment, the offloading-related command may be one of a program download command, a data loading command, a program execution command, and a result data read command. The present disclosure is not limited thereto. For example, the offloading-related command may include a program download command, a data loading command, a program execution command, or a result data read command.

On the other hand, the computing circuit 121 and the management circuit 123 may be separately implemented as hardware, or may be integrated into one circuit. For example, the computing circuit 121 and the management circuit 123 may each be implemented as a field programmable gate array (FPGA) or an application specific integrated circuit (ASIC). In some embodiments, at least one of the computing circuit 121 and the management circuit 123 may be implemented as software and may be executed by a processor (not illustrated) or a CPU (not illustrated) included in the first CSD 120_1. Although FIG. 1 discloses the computing circuit 121 and the management circuit 123 as separate configurations in order to clearly show operations according to embodiments, this is only an embodiment and the inventive concept is not limited thereto. For instance, the computing circuit 121 and the management circuit 123 may be integrated into a single circuit that performs both functions.

In an embodiment, the first CSD 120_1 may further include a memory controller (not illustrated) that controls a memory operation that is performed on the nonvolatile memory device 124. The memory controller (not illustrated) may be implemented to be physically separated from the computing circuit 121 and the management circuit 123.

In an embodiment, the memory device 122 may store the offloading program received from the host 100. The memory device 122 may be implemented as a volatile memory device. For example, the memory device 122 may include a volatile memory, such as static random access memory (SRAM), dynamic RAM (DRAM), or synchronous DRAM (SDRAM).

In an embodiment, the nonvolatile memory device 124 may provide a large-capacity memory space to the host 100. Specifically, the nonvolatile memory device 124 may store data received from the host 100. For example, the nonvolatile memory device 124 may include phase-change RAM (PRAM), magneto-resistive RAM (MRAM), resistive RAM (ReRAM), ferroelectric RAM (FRAM), flash memory, and the like. In some embodiments, the nonvolatile memory device 124 is a flash memory device, and the first CSD 120_1 may be implemented as a solid-state drive (SSD).

In some embodiments, the nonvolatile memory device 124 may store the offloading program received from the host 100. The technical idea of the inventive concept may also be applied to a management operation of the offloading program stored in the nonvolatile memory device 124.

In an embodiment, the computing circuit 121 may perform the offloading computing operation by executing the offloading program stored in the memory device 122. As a specific example, the computing circuit 121 may read data to be subjected to the offloading computing operation from among data stored in the nonvolatile memory device 124, may generate result data by performing the offloading computing operation on the read data, and may transmit the generated result data to the host 100. The data read from the nonvolatile memory device 124 and the result data may be stored in the memory device 122. In some embodiments, the memory device 122 may include a first memory area in which the offloading program is stored and a second memory area in which the read data and the result data are stored. The first memory area and the second memory area may be physically or logically separated from each other.

In the present specification, the offloading program may include computer programming codes in a form that is executable by the computing circuit 121, or may include a signal sequence (or command) for activating at least one function that is to be performed by the computing circuit 121.

In an embodiment, when a plurality of offloading programs are received from the host 100, the memory device 122 may store the offloading programs in the received order and may output the offloading programs to the computing circuit 121 in a first-in first-out (FIFO) manner. The computing circuit 121 may perform a plurality of offloading computing operations by executing the offloading programs sequentially output from the memory device 122. For example, the host 100 may include a plurality of containers (or a plurality of virtual machines) respectively corresponding to a plurality of users using the electronic system 10. The containers may respectively transmit the offloading programs to the first CSD 120_1 through the CSD driver 102_1. Some of the offloading programs may be the same offloading program, and others of the offloading programs may be different offloading programs. The management circuit 123 may manage at least one offloading program stored in the memory device 122, by considering the limitation of the memory space of the memory device 122, the efficient use of memory, and security.

In an embodiment, the management circuit 123 may manage the offloading program stored in the memory device 122 based on management information about the offloading program received from the host 100. In the present specification, the offloading program management may be defined as including an operation of maintaining or deleting the offloading program and an operation of determining whether to maintain or delete the offloading program.

In an embodiment, the management information about the offloading program may be used by the management circuit 123 to determine whether to maintain or delete the offloading program stored in the memory device 122.

In an embodiment, the management information may include a feature of the offloading program. The feature of the offloading program may be determined by the CSD driver 102_1 according to a management policy operated in the CSD driver 102_1. In the present specification, the management policy may be preset for efficient management of the offloading program, and the CSD driver 102_1 may determine the feature of the offloading program by monitoring the offloading program according to the management policy.

In an embodiment, the management policy may be set based on at least one of a frequency of access to the offloading program, a security level of the offloading program, and a setting of the container requesting offloading with respect to the offloading program. In the present specification, the frequency of access to the offloading program may be defined as a frequency of executing the offloading program in response to an offloading request or a frequency of receiving an offloading request corresponding to the offloading program.

In an embodiment, the management policy may be selected from among a plurality of management policies. Specifically, the management policy may be selected from among a plurality of management policies based on states of the first to kth CSDs 120_1 to 120_k, or may be selected by a plurality of containers. In addition, the management policy to be applied to each offloading program may be selected. In an embodiment, the CSD driver 102_1 may periodically or aperiodically update the management information based on the management policy.

In an embodiment, the management information may include a threshold value of deletion requirements of deleting the stored offloading program. As a specific example, the management information may include a reference frequency of the frequency of access to the offloading program as the threshold value. The management circuit 123 may monitor the frequency of access to the stored offloading program and may manage the stored offloading program by comparing a result of the monitoring (i.e., a number or frequency of access to the stored offloading program) with the threshold value. However, this is only an embodiment, and the inventive concept is not limited thereto, and the management information may include at least one of various threshold values considered in various deletion requirements.

In an embodiment, the management information may directly indicate whether the management circuit 123 maintains or deletes the corresponding offloading program, and furthermore, may indicate a deletion time point.

In an embodiment, the CSD driver 102_1 may transmit management information for managing the offloading program to the first CSD 120_1 in response to a request from the first CSD 120_1, or may independently transmit management information for managing the offloading program to the first CSD 120_1. In addition, in an embodiment, the CSD driver 102_1 may transmit the management information for managing the offloading program to the first CSD 120_1 by including the information for managing the offloading program in the offloading-related command. For example, the CSD driver 102_1 may transmit an offloading-related command and its associated management information together, for example, in parallel or sequentially.

In the embodiments as described above, the CSD driver 102_1 may transmit, to the second to kth CSDs 120_2 to 120_k, pieces of management information about the offloading programs stored in the second to kth CSDs 120_2 to 120_k. The second to kth CSDs 120_2 to 120_k may manage the stored offloading programs based on the pieces of management information.

In the electronic system 10 according to an embodiment, the host 100 may provide the pieces of management information about the offloading programs to the first to kth CSDs 120_1 to 120_k that perform the offloading computing operations by executing the stored offloading programs, and the first to kth CSDs 120_1 to 120_k may support the offloading function capable of efficient offloading computing operations and efficient memory use by managing the offloading programs based on the pieces of management information.

On the other hand, the electronic system 10 illustrated in FIG. 1 is only an embodiment, and the inventive concept is not limited thereto. It will be understood that the CSDs may be applied to various configurations of electronic systems capable of receiving offloading programs from the host.

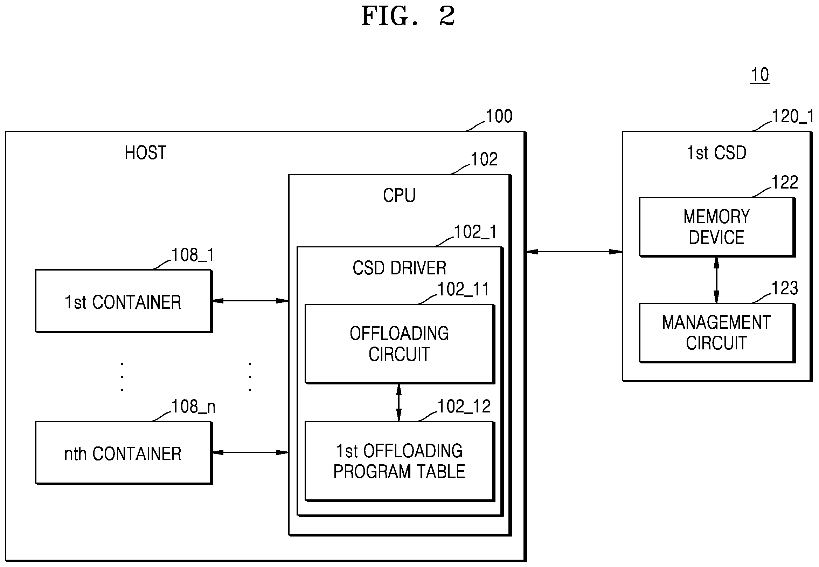

FIG. 2 is a block diagram for describing an implementation example of the host 100 of FIG. 1. An embodiment of the first CSD 120_1 that stores, in the memory device 122, the offloading program received from the host 100 and manages the stored offloading program through the management circuit 123 based on the management information received from the host 100, will be described with reference to FIG. 2. In addition, it will be understood that the embodiment of FIG. 2 is applicable to the second to kth CSDs 120_2 to 120_k of FIG. 1.

Referring to FIG. 2, the electronic system 10 may include the host 100 and the first CSD 120_1. The host 100 may include first to nth containers 108_1 to 108_n (where n is an integer greater than or equal to 1). In the present specification, the container corresponds to a user who uses a service provided by the electronic system 10, and may be defined as a virtual block that performs overall operations to provide a service desired by the user in response to a user's request. In some embodiments, the container may also be referred to as a virtual machine. The first to nth containers 108_1 to 108_n may perform operations in response to requests of first to nth users in parallel or in sequence, respectively.

In an embodiment, the CPU 102 may include the CSD driver 102_1. The CSD driver 102_1 may include an offloading circuit 102_11 and may manage a first offloading program table 102_12. In an embodiment, the first offloading program table 102_12 may include a mapping entry indicating the offloading program stored in the first CSD 120_1. Specifically, when a first offloading program is stored in the memory device 122 of the first CSD 120_1, the first offloading program table 102_12 may include a first mapping entry indicating that the first offloading program has been stored in the first CSD 120_1. In an embodiment, the offloading circuit 102_11 may update the first offloading program table 102_12 by adding a new mapping entry to the first offloading program table 102_12 or deleting an existing mapping entry from the first offloading program table 102_12.

In an embodiment, the offloading circuit 102_11 may transmit, to the first CSD 120_1, a signal for the offloading computing operation by referring to the first offloading program table 102_12 in response to the offloading request received from one of the first to nth containers 108_1 to 108_n. For example, when the offloading circuit 102_11 refers to the first offloading program table 102_12 and confirms that the offloading program for the requested offloading computing operation is not stored in the first CSD 120_1, the signal may include the offloading-related command and the offloading program. As another example, when the offloading circuit 102_11 refers to the first offloading program table 102_12 and confirms that the offloading program for the requested offloading computing operation is stored in the first CSD 120_1, the signal may include the offloading-related command.

In an embodiment, the offloading circuit 102_11 may generate management information including a feature of the offloading program stored in the first CSD 120_1 based on the management policy, and may update the management information by continuously monitoring the offloading program. In some embodiments, a mapping entry for the offloading program stored in the first CSD 120_1 of the first offloading program table 102_12 may include the management information.

In an embodiment, the offloading circuit 102_11 may transmit, to the first CSD 120_1, the management information about the offloading program stored in the memory device 122 of the first CSD 120_1. In an embodiment, the management circuit 123 may maintain or delete the offloading program stored in the memory device 122 based on the management information.

In an embodiment, when the offloading program stored in the memory device 122 is deleted, the management circuit 123 may transmit, to the offloading circuit 102_11, a notification signal notifying (i.e., representing) the deletion of the offloading program, and the offloading circuit 102_11 may update the first offloading program table 102_12 based on the notification signal.

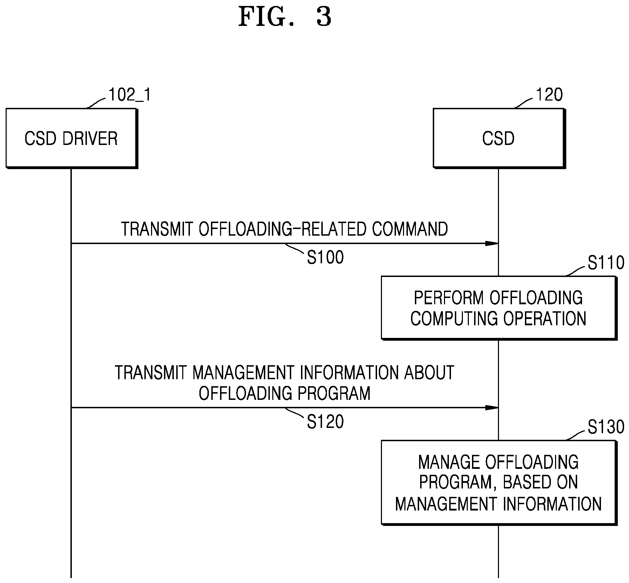

FIG. 3 is a flowchart of an operating method of an electronic system according to an embodiment. The electronic system may include a CSD driver 102_1 of a host and a CSD 120. Although only one CSD 120 is illustrated in FIG. 3, the embodiment disclosed in FIG. 3 may be applied to other CSDs (not illustrated).

Referring to FIG. 3, in operation S100, the CSD driver 102_1 may transmit an offloading-related command to the CSD 120. The CSD driver 102_1 may identify whether an offloading program is stored in the CSD 120 by referring to a first offloading program table, and may selectively transmit the offloading program to the CSD 120.

In operation S110, the CSD 120 may perform an offloading computing operation by executing the stored offloading program in response to the offloading-related command.

In operation S120, the CSD driver 102_1 may transmit, to the CSD 120, management information about the offloading program that is executed in the offloading computing operation that is completed in operation S110.

In operation S130, the CSD 120 may manage the stored offloading program based on the management information. The CSD 120 may maintain or delete the stored offloading program based on the management information. When the stored offloading program is deleted, the CSD 120 may transmit, to the CSD driver 102_1, a notification signal notifying the deletion of the stored offloading program.

The CSD driver 102_1 according to an embodiment may provide the management information to the CSD 120 so that the CSD 120 efficiently manages the stored offloading program. The CSD 120 may provide prompt, consistent, and efficient management of the stored offloading program based on the management information.

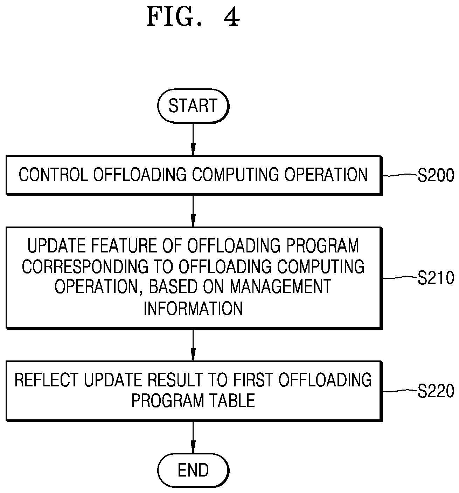

FIG. 4 is a flowchart of an operating method of a CSD driver according to an embodiment.

Referring to FIG. 4, in operation S200, the CSD driver may control an offloading computing operation of a CSD.

In operation S210, the CSD driver may update a feature of an offloading program corresponding to the offloading computing operation based on management information (e.g. based on a management policy).

For example, the feature of the offloading program may include a first feature indicating whether a status of the offloading program is hot/cold. The hot/cold status may indicate a frequency of access of the offloading program. The first feature may be determined according to the frequency of access to the offloading program. When the frequency of access to the offloading program is less than a reference frequency, the first feature may be determined as cold, and the offloading program stored in the CSD may be deleted based on the first feature. When the frequency of access to the offloading program is greater than or equal to the reference frequency, the first feature may be determined as hot, and the offloading program stored in the CSD may be maintained based on the first feature. It will be appreciated that the terms "hot" and "cold" are relative terms indicating the frequency of access. A "hot" status may be called a first status and a "cold" status may be called a second status. The first status may indicate that the frequency of access of the offloading program is greater than or equal to the reference frequency. The second status may indicate that the frequency of access of the offloading program is less than the reference frequency.

As another example, the feature of the offloading program may include a second feature determined according to a setting of a container about whether to delete an offloading program. The second feature may be determined when the deletion of the offloading program is set from the container, and the offloading program stored in the CSD may be deleted based on the second feature. The second feature may be determined when the maintaining of the offloading program is set from the container, and the offloading program stored in the CSD may be maintained based on the second feature. As another example, the feature of the offloading program may include a third feature determined according to a security level. When the security level of the offloading program is higher than a reference level, the third feature may be determined to indicate that the security level is high, and the offloading program stored in the CSD may be deleted based on the third feature. When the security level of the offloading program is lower than or equal to the reference level, the third feature may be determined to indicate that the security level is low, and the offloading program stored in the CSD may be maintained based on the third feature.

In operation S220, the CSD driver may update a first offloading program table with an update result of operation S210. The first offloading program table may include a feature corresponding to the offloading program of each of mapping entries, and the CSD driver may search for a mapping entry corresponding to the update result and update the found mapping entry with the update result of operation S210.

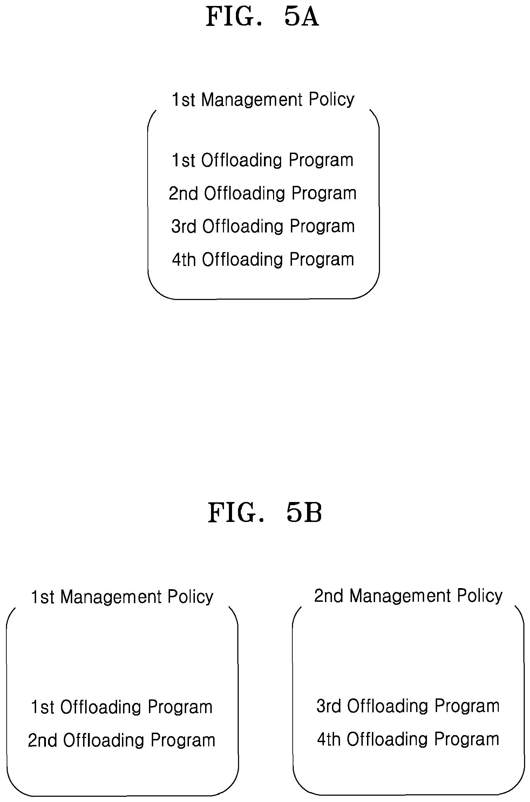

FIGS. 5A and 5B are diagrams for describing a management policy applied to first to fourth offloading programs according to an embodiment. The first to fourth offloading programs may be executed by a plurality of CSDs. However, this is only an embodiment, and the inventive concept is not limited thereto. In addition to the first to fourth offloading programs, more offloading programs may exist.

Referring to FIG. 5A, the same first management policy may be applied to the first to fourth offloading programs. That is, the same first management policy may be applied to the first to fourth offloading programs, so that pieces of management information about the first to fourth offloading programs may be generated based on the same criteria. Accordingly, the same management policy may be applied to each of the plurality of offloading programs.

Referring to FIG. 5B, a first management policy may be applied to first and second offloading programs, and a second management policy may be applied to third and fourth offloading programs. That is, a management policy that is different from a management policy of the third and fourth offloading programs is applied to the first and second offloading programs, so that pieces of management information about the first and second offloading programs may be generated based on a criterion that is different from a criterion of pieces of management information about the third and fourth offloading programs. Accordingly, different management policies may be applied to different subsets of the plurality of offloading programs.

For example, when the first management policy is based on the frequency of access to offloading programs, the CSD driver may determine the first feature indicating hot/cold of the first and second offloading programs by monitoring the frequency of access to the first and second offloading programs, and may generate pieces of management information about the first and second offloading programs. When the second management policy is based on the setting of the container for the offloading program, the CSD driver may determine the third feature of the third and fourth offloading programs by monitoring the setting of the container for the third and fourth offloading programs, and may generate pieces of management information about the third and fourth offloading programs. As another example, when the second management policy is based on the security level of the offloading program, the CSD driver may determine the second feature of the third and fourth offloading programs by monitoring the security levels of the third and fourth offloading programs, and may generate pieces of management information about the third and fourth offloading programs.

However, the first and second management policies are only an embodiment, and the inventive concept is not limited thereto. At least one of various management policies may be applied to the first to fourth offloading programs. It will be appreciated that the specific number of management policies and offloading programs shown in FIGs. 5A and 5B are merely examples, and that these numbers may be varied, depending on the requirements of the system.

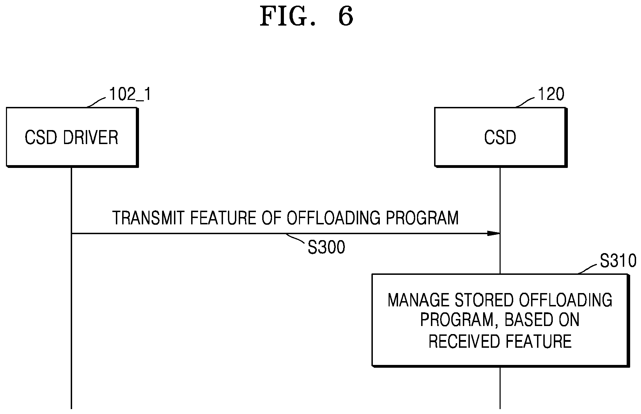

FIG. 6 is a flowchart of an operating method of an electronic system according to an embodiment. FIG. 6 illustrates an embodiment in which the management information in operation S120 of FIG. 3 includes the feature of the offloading program. The electronic system may include a CSD driver 120_1 of a host and a CSD 120. Although only one CSD 120 is illustrated in FIG. 6, the embodiment disclosed in FIG. 6 may be applied to other CSDs (not illustrated).

Referring to FIG. 6, in operation S300, the CSD driver 102_1 may transmit the feature of the offloading program to the CSD 120. The CSD driver 102_1 may determine the feature of the offloading program by monitoring the offloading program. As described above, the feature of the offloading program may correspond to one of the first feature based on the frequency of access to the offloading program, the second feature based on the setting of the container for the offloading program, and the third feature based on the security level of the offloading program, or may correspond to a combination of at least two of the first to third features.

In operation S310, the CSD 120 may manage the offloading program stored in the memory device based on the received feature. The CSD 120 may delete the stored offloading program when the received feature corresponds to a feature that necessitates deletion of the stored offloading program. Specifically, when the frequency of access to the stored offloading program is less than the reference frequency in the received feature, when the security level of the stored offloading program is higher than the reference level, or when the stored offloading program is set to be deleted from the container, the CSD 120 may delete the stored offloading program. When the stored offloading program is deleted, the CSD 120 may transmit, to the CSD driver 102_1, a notification signal notifying the deletion of the stored offloading program.

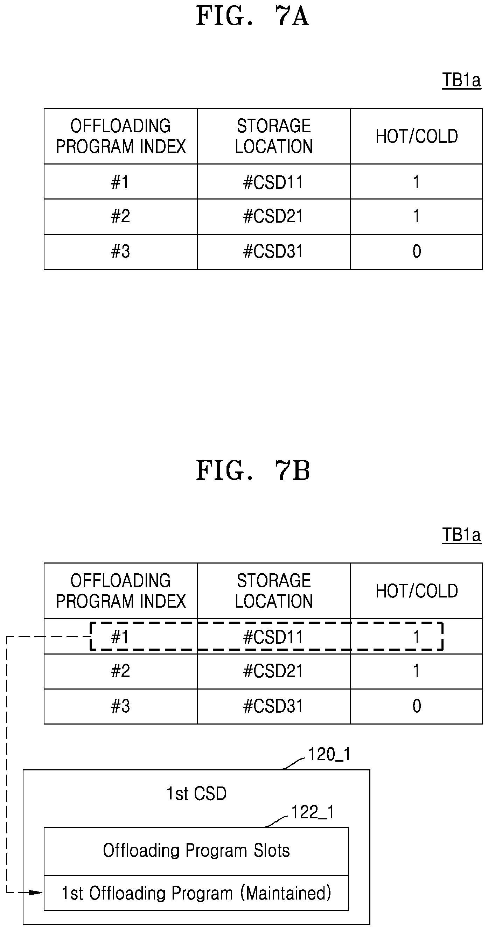

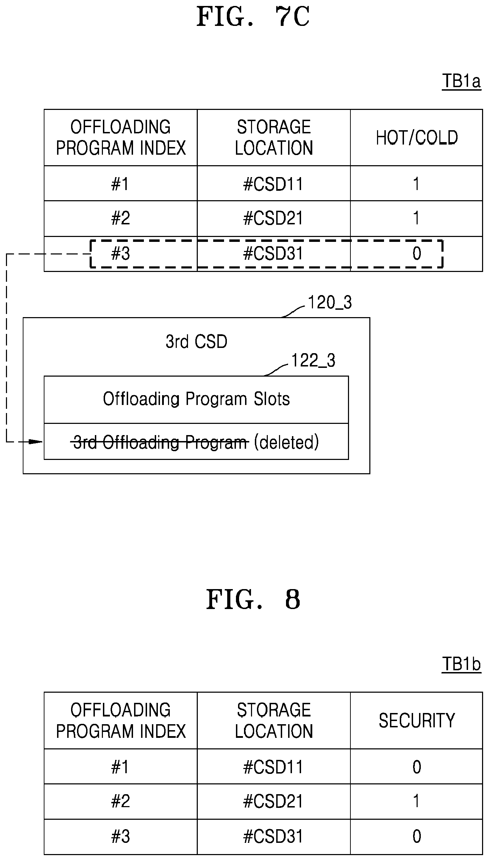

FIG. 7A is a diagram showing a first offloading program table TB1a according to an embodiment, and FIGS. 7B and 7C are diagrams for describing first and third CSDs 120_1 and 120_3 that operate based on a feature in the first offloading program table TB1a. As described above, the first offloading program table TB1a may be managed by a CSD driver of a host.

Referring to FIG. 7A, the first offloading program table TB1a may include an offloading program index field, a storage location field, and a hot/cold field. For example, the first offloading program table TB1a may include first to third mapping entries. The first mapping entry may include a first offloading program index of #1, a value of #CSD11 indicating a first CSD, and a value of 1 indicating a feature in which the first offloading program is 'hot,' wherein the value of #CSD11 and the value of 1 are each mapped to the first offloading program index of #1. The second mapping entry may include a second offloading program index of #2, a value of #CSD21 indicating a second CSD, and a value of 1 indicating a feature in which the second offloading program is 'hot,' wherein the value of #CSD21 and the value of 1 are each mapped to the second offloading program index of #2. The third mapping entry may include a third offloading program index of #3, a value of #CSD31 indicating a third CSD, and a value of 0 indicating a feature in which the feature of the third offloading program is 'cold,' wherein the value of #CSD31 and the value of 0 are each mapped to the third offloading program index of #3.

Referring to FIG. 7B, the first offloading program may be stored in one of offloading program slots 122_1 of a memory device included in a first CSD 120_1. The first CSD 120_1 may receive the feature indicating that the first offloading program is hot in the first mapping entry of the first offloading program table TB1a of the CSD driver, and may maintain the storage state of the first offloading program based on the received feature. In this manner, the first CSD 120_1 may perform an offloading computing operation by using the stored first offloading program again, and an unnecessary operation of receiving and storing the first offloading program may be omitted.

Referring to FIG. 7C, the third offloading program may be stored in one of offloading program slots 122_3 of a memory device included in a third CSD 120_3. The third CSD 120_3 may receive the feature indicating that the third offloading program is cold in the third mapping entry of the first offloading program table TB1a of the CSD driver, and may delete the third offloading program based on the received feature. Thereafter, the third CSD 120_3 may receive the third offloading program again for the offloading computing operation and store the third offloading program in an empty slot among the offloading program slots 122_3.

FIG. 8 is a diagram showing a first offloading program table TB1b according to an embodiment. As described above, the first offloading program table TB1b may be managed by a CSD driver of a host.

Referring to FIG. 8, the first offloading program table TB1b may include an offloading program index field, a storage location field, and a security field. For example, the first offloading program table TB1b may include first to third mapping entries. The first mapping entry may include a first offloading program index of #1, a value of #CSD11 indicating a first CSD, and a value of 0 indicating a feature in which the security level of the first offloading program is low. The value of #CSD11 and the value of 0 are each mapped to the first offloading program index of #1. The second mapping entry may include a second offloading program index of #2, a value of #CSD21 indicating a second CSD, and a value of 1 indicating a feature in which the security level of the second offloading program is high. The value of #CSD21 and the value of 1 are each mapped to the second offloading program index of #2. The third mapping entry may include a third offloading program index of #3, a value of #CSD31 indicating a third CSD, and a value of 0 indicating a feature in which the security level of the third offloading program is low. The value of #CSD31 and the value of 0 are each mapped to the third offloading program index of #3.

In an embodiment, the CSD may receive a security-related feature of the stored offloading program in the first offloading program table TB1b and manage the stored offloading programs based on the security-related feature. Specifically, the CSD may delete the stored offloading program when the feature indicates that the security level of the stored offloading program is high. However, this is only an embodiment, and the inventive concept is not limited thereto. The CSD may maintain the storage state of the offloading program when the feature indicates that the security level of the stored program is high.

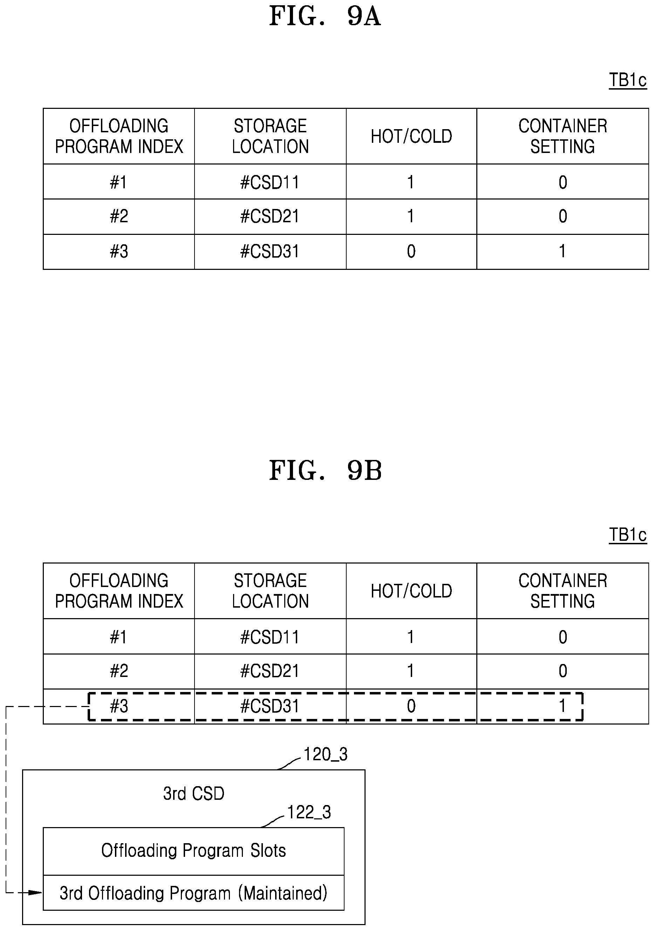

FIG. 9A is a diagram showing a first offloading program table TB1c according to an embodiment, and FIG. 9B is a diagram for describing a third CSD 120_3 that operates based on a feature in the first offloading program table TB1c. As described above, the first offloading program table TB1c may be managed by a CSD driver of a host.

Referring to FIG. 9A, the first offloading program table TB1c may further include a container setting field, compared with the first offloading program table TB1a of FIG. 7A. In an embodiment, the container setting field includes a value related to a feature set by a container for a corresponding offloading program, and may have a higher priority than a hot/cold feature. That is, the CSD may manage the stored offloading program by identifying the feature corresponding to the container setting field from among the feature of the first offloading program table TB1c as senior to other features thereof.

For example, a first mapping entry may further include a value of '0' indicating a feature set by the container for a first offloading program, compared with the first mapping entry of FIG. 7A. A second mapping entry may further include a value of '0' indicating a feature set by the container for a second offloading program, compared with the second mapping entry of FIG. 7A. A third mapping entry may further include a value of '1' indicating a feature set by the container for a third offloading program, compared with the third mapping entry of FIG. 7A. Specifically, when the feature set by the container has a value of '1,' it may mean that the container sets the offloading program to be maintained, and when the feature set by the container has a value of `0,' it may mean that the container sets the offloading program to be deleted. However, this is only an embodiment, and the inventive concept is not limited thereto. The value of the container setting field may be defined in various ways. Since the feature set by the container is senior to the feature of hot/cold, the offloading program is deleted or maintained according to the feature set by the container irrespective of the feature of hot/cold.

Referring to FIG. 9B, the third offloading program may be stored in one of offloading program slots 122_3 of a memory device included in a third CSD 120_3. The third CSD 120_3 may receive a feature indicating that the first offloading program is cold and a feature indicating that ` 1' is set by the container, in the third mapping entry of the first offloading program table TB1c of the CSD driver, and may maintain the storage state of the third offloading program based on the received feature. That is, the third CSD 120_3 may determine to maintain the storage state of the third offloading program by identifying the feature of the container setting field as senior to the feature of hot/cold. The third offloading program may be deleted based on the feature of the container setting field of `0,' although the feature of hot/cold has a value of ` 1' which means that the offloading program is in the status of hot. For example, when there is a conflict among the features in a mapping entry of the first offloading program table TB1c regarding whether to delete an offloading computing program, a CSD deletes or maintains the offloading computing program according to the feature of the container setting field.

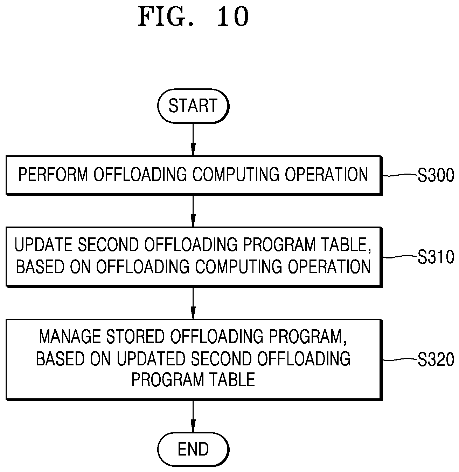

FIG. 10 is a flowchart of an operating method of a CSD according to an embodiment.

Referring to FIG. 10, in operation S300, the CSD may perform an offloading computing operation by executing an offloading program in response to an offloading-related command received from a CSD driver.

In operation S310, the CSD may update a second offloading program table based on the offloading computing operation. The second offloading program table is managed by the CSD and may include mapping entries indicating slot locations in which the offloading program is stored. In addition, the mapping entry may include a frequency of access to the corresponding offloading program, and the CSD may monitor the frequency of access to the corresponding offloading program. Specifically, the CSD may periodically or aperiodically update the frequency of access to the offloading program used in the offloading computing operation of operation S300 and the frequency of access to the unused offloading program not used in the offloading computing operation of operation S300.

In operation S320, the CSD may manage offloading programs stored in a memory device based on the updated second offloading program table. Specifically, the CSD may maintain a storage state of an offloading program having an access frequency greater than or equal to a reference frequency in the updated second offloading program table, and may delete an offloading program having an access frequency less than the reference frequency. For example, the reference frequency may be preset in the CSD. As another example, the reference frequency may be provided from the CSD driver to the CSD as management information, and a specific embodiment thereof will be described below.

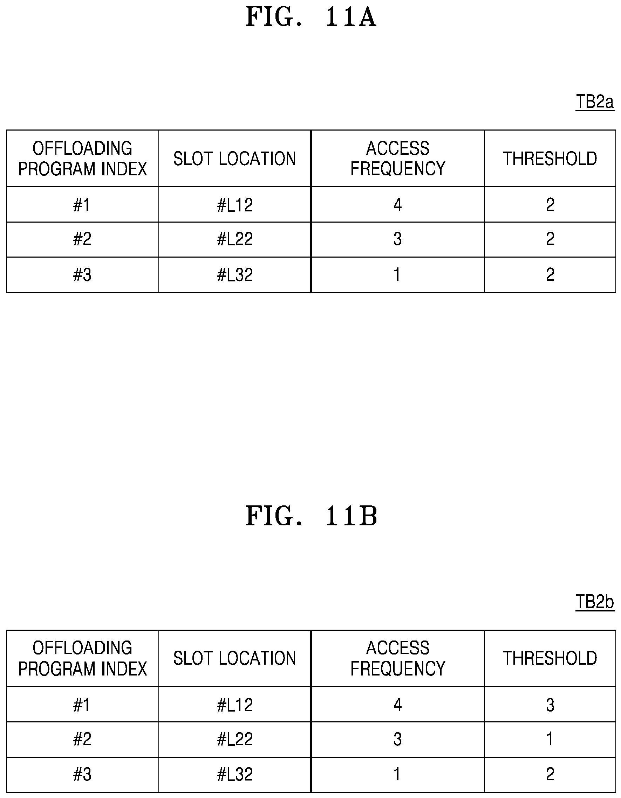

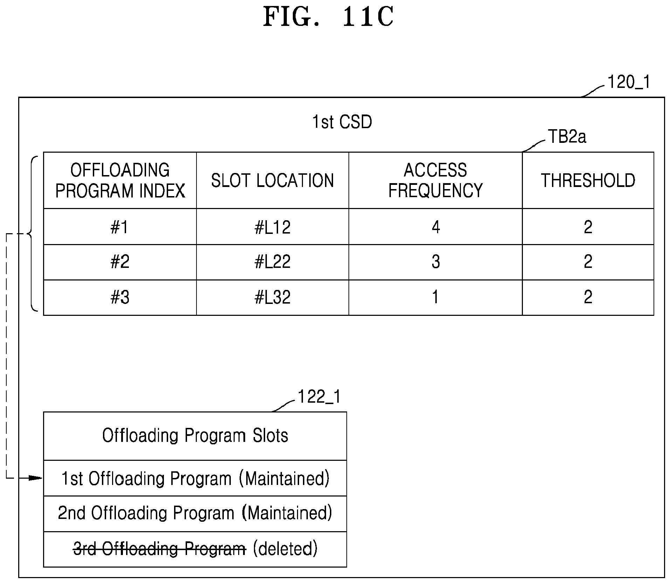

FIGS. 11A and 11B are diagrams respectively showing second offloading program tables TB2a and TB2b according to an embodiment, and FIG. 11C is a diagram for describing a first CSD 120_1 that operates based on the second offloading program table TB2a of FIG. 11A.

Referring to FIG. 11A, the second offloading program table TB2a may include an offloading program index field, a slot location field, an access frequency field, and a threshold field. For example, the second offloading program table TB2a may include first to third mapping entries. The first mapping entry may include a first offloading program index of #1, a value of #L12 indicating a slot location, a value of '4' indicating an access frequency, and a value of '2' indicating a threshold value. The value of #L12, the value of `4,' and the value of '2' are each mapped to the first offloading program index of #1. The second mapping entry may include a second offloading program index of #2, a value of #L22 indicating a slot location, a value of `3' indicating an access frequency, and a value of '2' indicating a threshold value. The value of #L22, the value of `3,' and the value of '2' are each mapped to the second offloading program index of #2. The third mapping entry may include a third offloading program index of #3, a value of #L32 indicating a slot location, a value of '1' indicating an access frequency, and a value of '2' indicating a threshold value. The value of #L32, the value of '1,' and the value of '2' are each mapped to the third offloading program index of #3.

Referring to FIG. 11B, threshold values corresponding to the first to third offloading programs may be different from each other. Specifically, the threshold value corresponding to the first offloading program may be `3,' the threshold value corresponding to the second offloading program may be `1,' and the threshold value corresponding to the third offloading program may be '2.' As described above, different threshold values may be used for the access frequencies of the first to third offloading programs. However, this is only an embodiment, and the inventive concept is not limited thereto. The same threshold value may be used for some of the first to third offloading programs.

Referring to FIG. 11C, first to third offloading programs may be stored in three slots from among offloading program slots 122_1 of a memory device included in the first CSD 120_1. The first CSD 120_1 may periodically or aperiodically update the access frequency field of the second offloading program table TB2a. For example, the first CSD 120_1 may update the second offloading program table TB2a by monitoring the access frequencies for the first to third offloading programs stored in the offloading program slots 122_1.

The first CSD 120_1 may maintain the storage states for the first and second offloading programs each having an access frequency greater than or equal to '2' by referring to the second offloading program table TB2a, and may delete the third offloading program having an access frequency less than the threshold value of `2.'

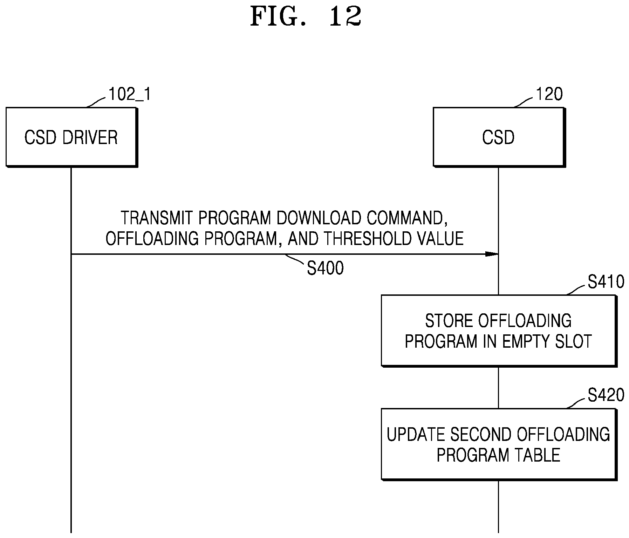

FIG. 12 is a flowchart of an operating method of an electronic system according to an embodiment. The electronic system may include a CSD driver 102_1 of a host and a CSD 120. Although only one CSD 120 is illustrated in FIG. 12, the embodiment disclosed in FIG. 12 may be applied to other CSDs (not illustrated).

Referring to FIG. 12, in operation S400, the CSD driver 102_1 may transmit a program download command, an offloading program, and a threshold value to the CSD 120. The threshold value is management information according to an embodiment and may correspond to the reference frequency as described above with reference to FIGS. 11A to 11C.

In operation S410, the CSD 120 may store the received offloading program in one of offloading program slots of a memory device in response to the program download command.

In operation S420, the CSD 120 may update a second offloading program table using the received threshold value. After storing the received threshold value in the second offloading program table, the CSD may manage the stored offloading program based on the threshold value.

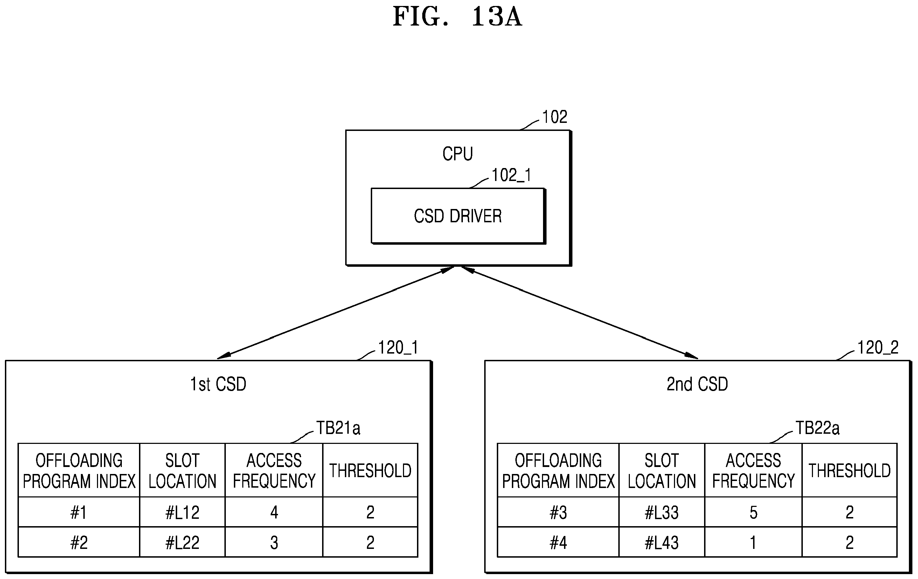

FIGS. 13A to 13C are block diagrams for describing an operating method of an electronic system according to an embodiment. The electronic system may include a CPU 102 of a host and first and second CSDs 120_1 and 120_2. The CPU 102 may include a CSD driver 102_1. The first and second CSDs 120_1 and 120_2 may manage second offloading program tables TB21a and TB22a, respectively.

Referring to FIG. 13A, the second offloading program table TB21a of the first CSD 120_1 may include first and second mapping entries. The first mapping entry may include a first offloading program index of #1, a value of #L12 indicating a slot location, a value of '4' indicating an access frequency, and a value of '2' indicating a threshold value. The value of #L12, the value of `4,' and the value of '2' are each mapped to the first offloading program index of #1. The second mapping entry may include a second offloading program index of #2, a value of #L22 indicating a slot location, a value of '3' indicating an access frequency, and a value of '2' indicating a threshold value. The value of #L22, the value of `3,' and the value of '2' are each mapped to the second offloading program index of #2.

The second offloading program table TB22a of the second CSD 120_2 may include third and fourth mapping entries. The third mapping entry may include a third offloading program index of #3, a value of #L33 indicating a slot location, a value of '5' indicating an access frequency, and a value of '2' indicating a threshold value. The value of #L32, the value of `5,' and the value of '2' are each mapped to the third offloading program index of #3. The fourth mapping entry may include a fourth offloading program index of #4, a value of #L43 indicating a slot location, a value of '1' indicating an access frequency, and a value of '2' indicating a threshold value. The value of #L43, the value of `1,' and the value of '2' are each mapped to the fourth offloading program index of #4.

In an embodiment, the CSD driver 102_1 may transmit threshold values for the first to fourth offloading programs to the first and second CSDs 120_1 and 120_2 as management information. In addition, the CSD driver 102_1 may set the threshold values for the first to fourth offloading programs to be equal to each other. In some embodiments, the CSD driver 102_1 may transmit changed threshold values to the first and second CSDs 120_1 and 120_2, and the first and second CSDs 120_1 and 120_2 may apply the changed threshold values to the second offloading program tables TB21a and TB22a.

The first CSD 120_1 may manage the first and second offloading programs based on the second offloading program table TB21a. The first CSD 120_1 may update the second offloading program table TB21a by monitoring the access frequencies for the first and second offloading programs.

The second CSD 120_2 may manage the third and fourth offloading programs based on the second offloading program table TB22a. The second CSD 120_2 may update the second offloading program table TB22a by monitoring the access frequencies for the third and fourth offloading programs.

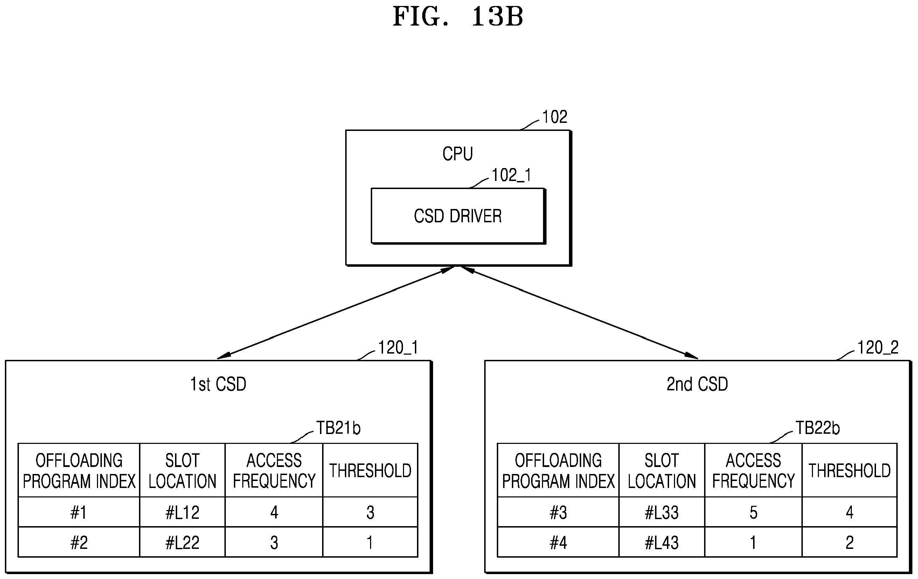

Referring to FIG. 13B, the CSD driver 102_1 may set different threshold values for the first to fourth offloading programs and transmit the threshold values to the first and second CSDs 120_1 and 120_2. Specifically, the CSD driver 102_1 may set the threshold value for the first offloading program to `3,' may set the threshold value for the second offloading program to '1,' may set the threshold value for the third offloading program to `4,' and may set the threshold value for the fourth offloading program to `2.'

The CSD driver 102_1 may transmit the set threshold values to the first and second CSDs 120_1 and 120_2, and the first and second CSDs 120_1 and 120_2 may update the second offloading program tables TB21b and TB22b with the received threshold values.

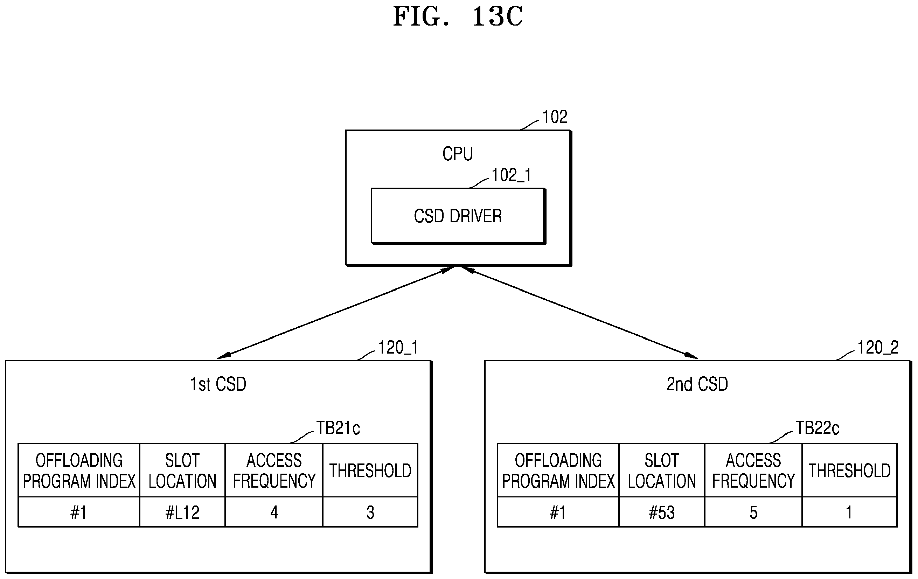

Referring to FIG. 13C, unlike in FIG. 13A, the first offloading program may be stored in the first and second CSDs 120_1 and 120_2. The CSD driver 102_1 may set different threshold values for the same offloading program based on the states of the first and second CSDs 120_1 and 120_2. In the present specification, the state of the CSD may include an available space of a memory device included in the CSD, the number of offloading programs stored in the CSD, and the like. Specifically, when the available space of the memory device of the first CSD 120_1 in which the first offloading program is stored is large (e.g. greater than equal to a threshold storage space) and the available space of the memory device of the second CSD 120_2 in which the first offloading program is stored is small (e.g. less than the threshold storage space), the CSD driver 102_1 may set the threshold value for the first offloading program stored in the first CSD 120_1 to a first value (in this case, '3') and may set the threshold value for the first offloading program stored in the second CSD 120_2 to a second value that is less than the first value (in this case, `1').

The CSD driver 102_1 may transmit the set threshold values to the first and second CSDs 120_1 and 120_2, and the first and second CSDs 120_1 and 120_2 may update second offloading program tables TB21c and TB22c with the received threshold values.

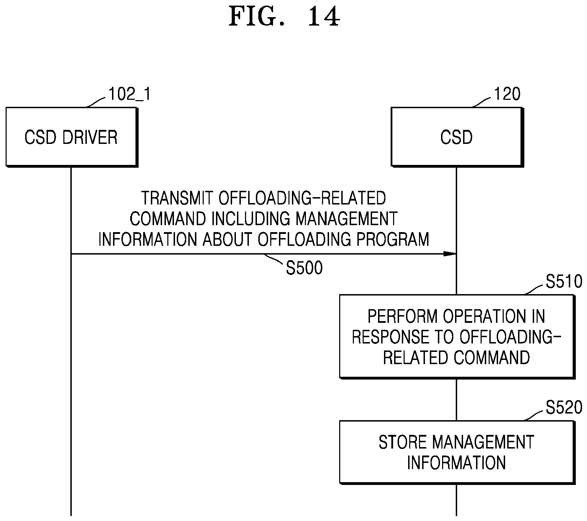

FIG. 14 is a flowchart of an operating method of an electronic system according to an embodiment. The electronic system may include a CSD driver 102_1 and a CSD 120. Although only one CSD 120 is illustrated in FIG. 14, the embodiment disclosed in FIG. 14 may be applied to other CSDs (not illustrated).

Referring to FIG. 14, in operation S500, the CSD driver 102_1 may transmit, to the CSD 120, an offloading-related command including management information about an offloading program.

In operation S510, the CSD 120 may perform an operation in response to the offloading-related command.

In operation S520, the CSD 120 may store the management information included in the offloading-related command. For example, the CSD 120 may extract the management information from the offloading-related command and may store the extracted management information in a second offloading program table.

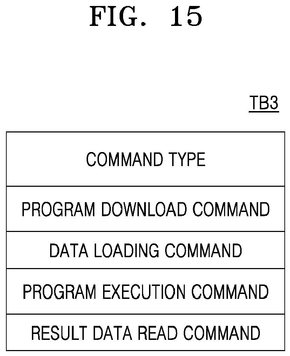

FIG. 15 is a table for describing the offloading-related command including the management information according to an embodiment.

Referring to FIG. 15, as shown in a third table TB3, the offloading-related command may correspond to one of a program download command, a data loading command, a program execution command, and a result data read command.

The program download command may be a command that indicates (or instructs) a CSD to store an offloading program in a memory device. The data loading command may be a command that indicates (or instructs) the CSD to read data necessary for an offloading computing operation from a nonvolatile memory device and load the read data into another memory device. The program execution command may be a command that indicates (or instructs) a computing circuit of the CSD to execute the offloading program to perform an offloading computing operation. The result data read command may be a command that indicates (or instructs) a result of the offloading computing operation to be transmitted from the CSD to a CSD driver (or a host).

The CSD driver may include the management information in one of the program download command, the data loading command, the program execution command, and the result data read command. Hereinafter, an embodiment in which the CSD driver includes the management information in the program download command will be described, but this is only an embodiment, and the inventive concept is not limited thereto.

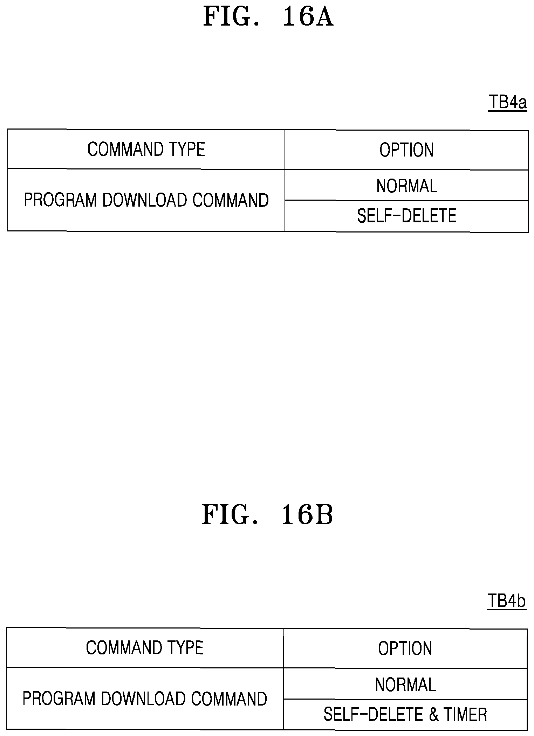

FIGS. 16A and 16B are tables for describing a method of transmitting management information according to an embodiment.

Referring to FIG. 16A, as shown in a fourth table TB4a, the program download command may include an option field. The option field may be set to 'normal' or 'self-delete.' 'Self-delete' may be an option indicating to delete the offloading program immediately or at a predetermined time after completion of an offloading computing operation, and 'normal' may be an option indicating that the option field is not set to 'self-delete.' Information filled in the option field is management information. When the option field of the program download command is filled with a value corresponding to 'self-delete,' the CSD may delete the offloading program immediately or at a predetermined time after completion of an offloading computing operation corresponding to the program download command. The management information corresponding to 'self-delete' may include first information indicating self-deletion after completion of the offloading computing operation.

Referring to FIG. 16B, as shown in a fourth table TB4b, the program download command may include an option field. The option field may be set to 'normal' or 'self-delete & timer.' 'Self-delete & timer' may be an option indicating to delete the offloading program immediately after a certain timer expires, and 'normal' may be an option indicating that the option field is not set to 'self-delete & timer.' Information filled in the option field is management information. When the option field of the program download command is filled with a value corresponding to 'self-delete & timer,' the CSD may delete the offloading program when the certain timer expires from completion of the offloading computing operation corresponding to the program download command. The management information corresponding to 'self-delete & timer' may include first information about a timer that expires after a certain time from completion of the offloading computing operation, and second information indicating self-deletion when the timer expires.

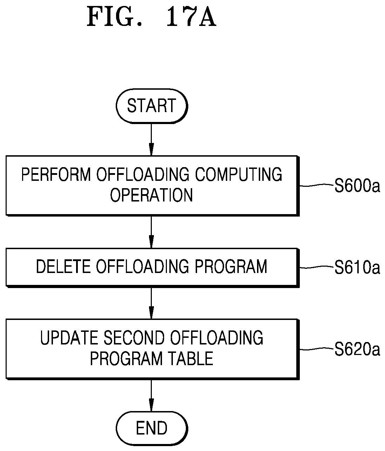

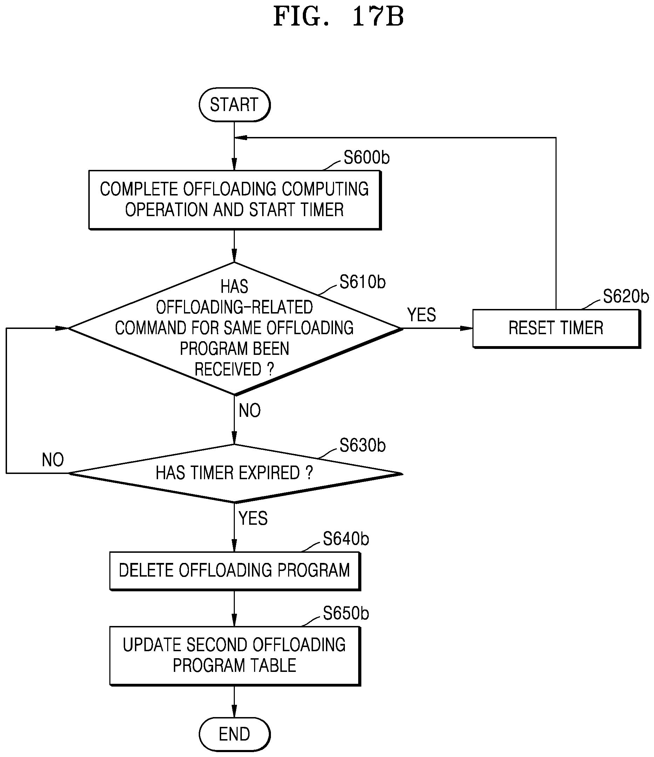

FIGS. 17A and 17B are flowcharts of an operating method of a CSD according to an embodiment. An operation when the CSD receives an offloading-related command indicating 'self-delete' will be described with reference to FIG. 17A, and an operation when the CSD receives an offloading-related command indicating 'self-delete & timer' will be described with reference to FIG. 17B.

Referring to FIG. 17A, in operation S600a, the CSD may perform an offloading computing operation.

In operation S610a, the CSD may delete the stored offloading program after the offloading computing operation of operation S600a is completed in response to management information 'self-delete' included in the offloading-related command.

In operation S620a, the CSD may update a second offloading program table based on the deleted offloading program. In addition, the CSD may transmit, to a CSD driver, a notification signal indicating that the stored offloading program has been deleted.

Referring to FIG. 17B, in operation S600b, the CSD may complete the offloading computing operation and start a timer. The timer may be based on the management information included in the offloading-related command.

In operation S610b, the CSD may determine whether an offloading-related command for the same offloading program as the offloading program used in operation S600b has been received.

When operation S610b is `YES,' the CSD may reset the timer in operation S620b and may perform operation S600b in response to the newly received offloading-related command.

When operation S610b is `NO,' the CSD may determine whether the timer has expired in operation S630b.

When operation S630b is `NO,' the CSD may continuously perform (e.g. repeat) operation S610b.

When operation S630b is `YES,' the CSD may delete the offloading program in operation S640b.

In operation S650b, the CSD may update a second offloading program table based on the deleted offloading program. In addition, the CSD may transmit, to a CSD driver, a notification signal indicating that the stored offloading program has been deleted.

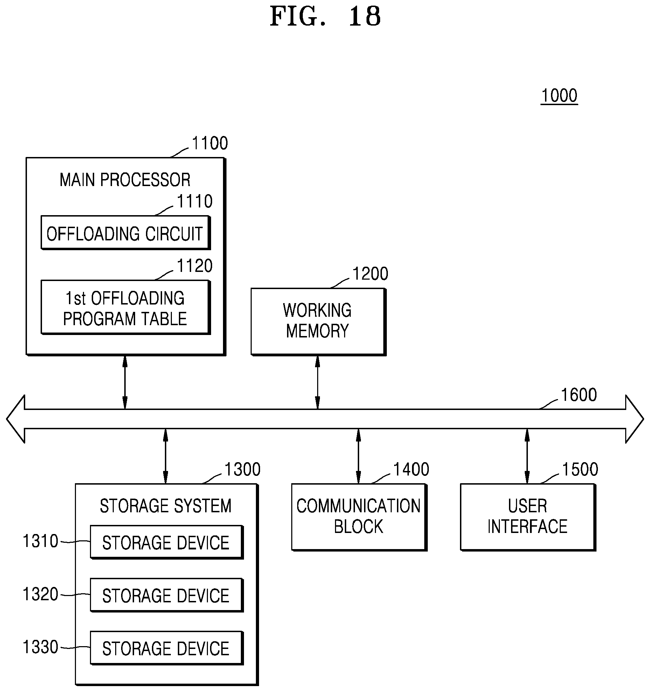

FIG. 18 is a block diagram illustrating an electronic system 1000 according to an embodiment.

Referring to FIG. 18, the electronic system 1000 may include a main processor 1100, a working memory 1200, a storage system 1300, a communication block 1400, a user interface 1500, and a bus 1600. For example, the electronic system 1000 may be one of electronic devices, such as a desktop computer, a laptop computer, a tablet computer, a smartphone, a wearable device, a video game console, a workstation, one or more servers, an electric vehicle, a home appliance, or a medical device.

The main processor 1100 may control overall operations of the electronic system 1000. For example, the main processor 1100 may be implemented as a general-purpose processor, a dedicated processor, or an application processor each including one or more processor cores.

The main processor 1100 may include an offloading circuit 1110 and a first offloading program table 1120 according to the embodiments as described above with reference to FIGS. 1 to 17B. The offloading circuit 1110 may generate pieces of management information about offloading programs stored in the storage system 1300 by using the first offloading program table 1120, and may provide the pieces of management information to the storage system 1300.

The working memory 1200 may store data used for the operation of the electronic system 1000. For example, the working memory 1200 may temporarily store data processed or to be processed by the main processor 1100. For example, the working memory 1200 may include a volatile memory, such as SRAM, DRAM, or SDRAM, and/or a nonvolatile memory, such as PRAM, MRAM, ReRAM, or FRAM.

The storage system 1300 may include one or more storage devices. For example, the storage system 1300 may include storage devices 1310, 1320, and 1330. Although FIG. 18 illustrates the three storage devices 1310, 1320, and 1330, the number of storage devices included in the storage system 1300 may be variously changed or modified to suit the requirements of the electronic system 1000.

The storage devices 1310, 1320, and 1330 may each store data regardless of power supply. For example, the storage devices 1310, 1320, and 1330 may each include a nonvolatile memory, such as flash memory, PRAM, MRAM, ReRAM, or FRAM. For example, the storage devices 1310, 1320, and 1330 may each include a storage medium, such as SSD, card storage, or embedded storage.

The storage devices 1310, 1320, and 1330 may each share the load of the main processor 1100 by including a computing circuit that performs an offloading computing operation. According to the embodiments as described above with reference to FIGS. 1 to 17B, the storage devices 1310, 1320, and 1330 may each manage the stored offloading programs based on the management information provided from the main processor 1100.

The communication block 1400 may support at least one of various wireless/wired communication protocols in order to communicate with an external device/system of the electronic system 1000. The user interface 1500 may include various input/output interfaces in order to mediate communication between a user and the electronic system 1000.

The bus 1600 may provide a communication path between the components of the electronic system 1000. The components of the electronic system 1000 may exchange data according to a bus format of the bus 1600. For example, the bus format may include at least one of various interface protocols, such as universal serial bus (USB), small computer system interface (SCSI), peripheral component interconnect express (PCIe), serial advanced technology attachment (SATA), serial attached SCSI (SAS), nonvolatile memory express (NVMe), universal flash storage (UFS)), or double data rate (DDR), low power DDR (LPDDR).

The main processor 1100 may operate as a host. The main processor 1100 may provide services to the user by communicating with the respective storage devices 1310, 1320, and 1330. For example, the main processor 1100 may store data in the storage devices 1310, 1320, and 1330, and may read data stored in the storage devices 1310, 1320, and 1330.

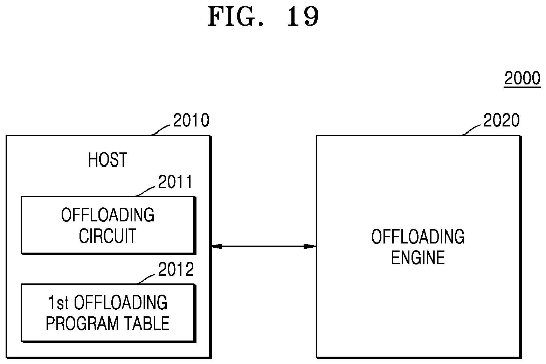

FIG. 19 is a block diagram illustrating a database system 2000 according to an embodiment.

Referring to FIG. 19, the database system 2000 may include a host 2010 and an offloading engine 2020. In some embodiments, the offloading engine 2020 may be a portion of the host 2010, or may be connected to the host 2010. The host 2010 may be a computer or a server including a CPU, a main memory, and a persistent storage device (e.g., hard drive, SSD, etc.). The offloading engine 2020 may include a persistent memory, or may be connected to a persistent memory. The persistent memory may be a type of memory that maintains a balance between speed, capacity, and retention. The offloading engine 2020 may include a processing circuit and a memory. The offloading engine 2020 may be connected to the host 2010 through one of various interfaces including NVDIMM-p and PCIe (via a memory channel).

The host 2010 may perform various database processing operations including query execution. The host 2010 may include an offloading circuit 2011 and a first offloading program table 2012 according to the embodiments as described above with reference to FIGS. 1 to 17B. The offloading circuit 2011 may generate pieces of management information about offloading programs stored in the offloading engine 2020 by using the first offloading program table 2012, and may provide the pieces of management information to the offloading engine 2020.

The offloading engine 2020 may reduce the load of the host 2010 by performing offloading computing operations (e.g., database processing operations) on behalf of the host 2010. According to the embodiments as described above with reference to FIGS. 1 to 17B, the offloading engine 2020 may manage the stored offloading programs based on the management information provided from the host 2010.

In some embodiments, the offloading engine 2020 may be designed with specialized hardware to require less energy than general-purpose hardware of the CPU of the host 2010 when performing processing operations on behalf of the host 2010.

While the inventive concept has been particularly shown and described with reference to embodiments thereof, it will be understood that various changes in form and details may be made therein without departing from the scope of the following claims.

## Claims

1. An electronic system comprising:
a computational storage device comprising a computing circuit and a memory device, wherein the computing circuit is configured to perform an offloading computing operation, and the memory device is configured to store an offloading program for the offloading computing operation; and
a host configured to transmit, in response to an offloading request from a virtual machine, an offloading-related command for controlling the offloading computing operation and management information about the offloading program to the computational storage device,
wherein the computational storage device is configured to delete the offloading program based on the management information.

2. The electronic system of claim 1,
wherein the host is configured to further monitor the offloading program and determine a feature of the offloading program based on a management policy, and
wherein the management information comprises the feature of the offloading program that is determined based on the management policy.

3. The electronic system of claim 2,
wherein the host is configured to further periodically or aperiodically update the management information based on the management policy.

4. The electronic system of claim 2 or claim 3,
wherein the management policy is set based on at least one of a frequency of access to the offloading program, a security level of the offloading program, and a setting of the virtual machine about whether to delete the offloading program .

5. The electronic system of any of claims 2-4,
wherein the feature comprises a first feature indicating whether a status of the offloading program is hot/cold according to a frequency of access to the offloading program, and
wherein the computational storage device is configured to further delete the offloading program when the feature of the offloading program corresponds to cold.

6. The electronic system of any of claims 2-5,
wherein the feature comprises a second feature that is determined according to a setting of the virtual machine about whether to delete the offloading program, and
wherein the computational storage device is configured to further delete the offloading program when the second feature has a specific value.

7. The electronic system of any preceding claim,
wherein the management information comprises a reference frequency of a frequency of access to the offloading program, and
wherein the computational storage device is configured to further delete the offloading program when the frequency of access to the offloading program is less than the reference frequency.

8. The electronic system of any preceding claim,
wherein the management information is transmitted with the offloading-related command.

9. The electronic system of claim 8,
wherein the management information comprises first information indicating whether to perform self-deletion of the offloading program at a predetermined time after completion of the offloading computing operation performed using the offloading program.

10. The electronic system of claim 8,
wherein the management information comprises:
first information about a timer that expires after a certain time from completion of the offloading computing operation; and
second information indicating whether to perform self-deletion when the timer expires.

11. The electronic system of any preceding claim,
wherein the offloading-related command includes a program download command, a data loading command, a program execution command, or a result data read command.

12. The electronic system of any preceding claim,
wherein the host is configured to further manage a first offloading program table including a mapping entry corresponding to the offloading program that has been stored in the computational storage device, and
wherein the first offloading program table comprises the management information about the offloading program.

13. The electronic system of claim 12,
wherein the computational storage device is configured to further transmit, to the host, a notification signal indicating that the offloading program has been deleted, and
wherein the host is configured to further update the first offloading program table based on the notification signal.

14. An electronic system comprising:
a plurality of computational storage devices, wherein each computational storage device is configured to:
store at least one offloading program from among a plurality of offloading programs, and
perform an offloading computing operation based on the stored at least one offloading program; and
a host configured to transmit, in response to a plurality of offloading requests from a plurality of virtual machines, a plurality of offloading-related commands, each offloading-related command controlling an offloading computing operation of a corresponding one of the plurality of computational storage devices, and a plurality of pieces of management information, each piece of management information being about at least one offloading program stored in a corresponding one of the plurality of computational storage devices to the plurality of computational storage devices.

15. The electronic system of claim 14,
wherein the plurality of computational storage devices are further configured to delete the stored at least one offloading program based on at least one of the plurality of pieces of management information.
